Europäisches Patentamt

European Patent Office

Office européen des brevets

(19)

(11) Numéro de publication: **0 064 911**

**A1**

(12)

# DEMANDE DE BREVET EUROPEEN

(21) Numéro de dépôt: **82400763.7**

(22) Date de dépôt: **28.04.82**

(51) Int. Cl.³: **F 23 C 11/02**
**B 01 J 8/18, F 27 B 15/14**

(30) Priorité: **29.04.81 FR 8108523**

(43) Date de publication de la demande:
**17.11.82 Bulletin 82/46**

(84) Etats contractants désignés:
**AT BE CH DE GB IT LI LU NL SE**

(71) Demandeur: **Jeanmenne, Pierre**
**3 avenue Pasteur**
**F-10000 Troyes(FR)**

(72) Inventeur: **Jeanmenne, Pierre**
**3 avenue Pasteur**
**F-10000 Troyes(FR)**

(54) **Procédé de démarrage, de préchauffage ou de chauffage d'un ensemble de combustion à lit fluidisé et appareillage s'y rapportant.**

(57) Installation de combustion à lit fluidisé dans laquelle du carburant est injecté dans le lit (4) par des injecteurs (9) alimentés par une rampe (5) située dans l'axe du tube de répartition (2) du gaz de fluidisation. Une plaque de distribution au fond du lit est supprimée; l'injection du carburant dans le lit permet le préchauffage du lit en même temps que sa fluidisation.

EP 0 064 911 A1

Croydon Printing Company Ltd.

1

La présente invention concerne les divers systèmes dans lesquels une combustion ou une calcination est réalisée au sein de produits divisés par un flux de fluide gazeux.

Les différents dispositifs connus et plus particulièrement ceux fonctionnant avec un combustible solide sont d'une mise en route malaisée. Ils nécessitent souvent un système de préchauffage extérieur pour porter le lit à sa température de fonctionnement. Certains dispositifs connus nécessitent un chauffage du gaz de fluidisation pour élever la température de l'ensemble du lit, ce qui rend obligatoire un énergique refroidissement de certains éléments, donc l'utilisation de technologies délicates et coûteuses. Le temps nécessaire à porter l'ensemble du lit à la température permettant l'introduction d'un combustible solide est souvent très long.

D'autre part, la majorité des dispositifs connus utilisent pour distribuer le gaz de fluidisation dans le lit des plaques de distribution. Celles-ci, véritables fonds perforés du four à lit fluidisé posent de grands problèmes de déformation dûs à la dilatation thermique, et dûs d'autre part à la charge que représente le lit de particules, surtout en dehors des périodes où il est fluidisé.

Le procédé selon l'invention permet d'éviter ces inconvénients. Le préchauffage du lit est en effet réalisé par l'injection directe d'un carburant dans le lit par l'intérieur des tubes horizontaux de répartition du gaz de fluidisation.

Selon l'invention, le gaz de fluidisation est réparti dans le lit par des tubes horizontaux disposés à l'intérieur de celui-ci. Des perforations permettent au gaz de fluidisation de s'échapper à l'intérieur du lit de particules pour ainsi assurer son émulsion.

Le combustible de démarrage est injecté à travers ces orifices perpendiculairement à l'axe de ces tubes de répartition.

Le gaz de fluidisation peut être un gaz comburant, tel l'air frais, ou de recyclage plus ou moins riche en oxygène. La proportion carburant/comburant doit être telle que la combustion se fasse dans le lit à l'extérieur des tubes de répartition du gaz de fluidisation.

Le préchauffage très rapide du lit ainsi obtenu permet d'économiser le carburant de démarrage.

L'injection proprement dite de ce carburant peut être réalisée par tout dispositif connu : gicleur, pastille, etc... Les dispositifs utilisés sont alimentés directement par un tube de distribution de car-

2

burant situé à l'intérieur du tube horizontal de répartition du gaz fluidisant et ce, parallélement à l'axe de celui-ci.

La circulation du gaz froid de fluidisation autour des rampes d'injection ainsi réalisées permet de les maintenir à basse température et empêche ainsi tout danger d'un échauffement anormal

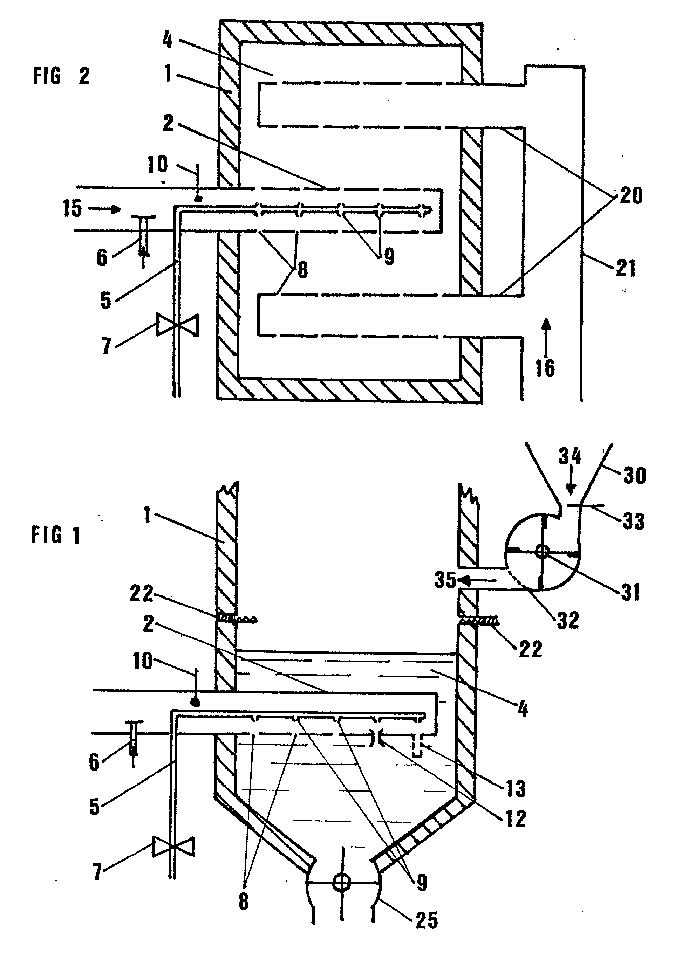

La figure I est une vue schématique du dispositif vu en coupe verticale. Il est bien entendu que l'orientation des orifices de distribution du gaz de fluidisation peut être totalement différente; l'echappement vertical n'ayant été retenu que pour la clarté du dessin.

Tel que représenté figure I, le dispositif selon l'invention comporte une rampe 5 de distribution du carburant disposée dans l'axe du tube 2 de répartition du gaz de fluidisation. Le carburant est libéré par les injecteurs 9 dans l'axe des orifices 8 par lesquels le gaz de fluidisation est lâché dans le lit 4 qu'il met en mouvement dans l'enceinte 1. Un profil de Venturi 12 ou des tubes secondaires de répartition 13 peuvent être utilisés facultativement pour améliorer la répartition.

Une réalisation simple de l'invention conçue pour un préchauffage au gaz et l'utilisation de combustible solide en service peut être réalisée selon les figures I et II. Des tubes métalliques 2 et 20 traversant la paroi du four I sont positionnés dans le lit 4. Ceux-ci sont bouchés à une extrémité et percés d'un certain nombre de trous 8 par lesquels le gaz de fluidisation est libéré dans le lit. Dans l'axe d'un ou de plusieurs de ces tubes sont montées des rampes 5 de distribution de carburant. Des injecteurs 9 libèrent le gaz carburant dans l'axe des orifices 8. Des allumeurs 22 placés au dessus du lit permettent l'inflammation du carburant. Ceux-ci pouvant dans le présent exemple être effacés après utilisation. Le comburant est fourni par apport en 15 d'air ambiant. Une vanne 7 commande l'arrivée du carburant. Une sonde thermométrique 10 contrôle la température au niveau de la rampe de carburant 5 et empêche l'ouverture de la vanne 7 au dessus d'un seuil de température fixé. Une sonde 6 interdit aussi l'ouverture de la vanne 7 tant qu'un courant d'air 15 n'a pas été créé dans le tube 2. Les tubes 20 non munis de rampe de chauffage sont reliés à une canalisation 21 par laquelle le complément de gaz de fluidisation 16 est envoyé dans le lit.

Dans l'exemple présenté, le carburant solide 34 est chargé dans une trémie 30. Son débit est réglé en 33. Un ou plusieurs broyeurs à marteaux 31 le projette dans le foyer en 35 après lui avoir fait traverser la grille 32. Le profil des marteaux et la vitesse de rotation du broyeur sont tels que le courant d'air ainsi créé est suffisant pour empêcher toute remontée de flamme tout en ne perturbant pas la combustion à l'intérieur du foyer.

Une vanne écluse 25 ou tout autre dispositif permet d'extraire l'excès de lit et de cendres de façon à maintenir un niveau de fonctionnement optimum.

L'exemple de réalisation présenté ci-dessus permet d'amener le carburant/très divisé et d'enflammer celui-ci à la surface du lit 4. En de préchauffage contrôlant la progressivité du débit de gaz de fluidisation de telle sorte que la totalité du lit ne soit pas fluidisée, seule une faible épaisseur en surface est fluidisée et portée très rapidement à la température nécessaire. Il est ainsi possible, lors de l'utilisation d'un combustible solide, d'admettre progressivement celui-ci. Sa parfaite combustion permet d'arrêter rapidement l'utilisation du combustible de préchauffage. L'augmentation progressive des débits de gaz de fluidisation et de combustible solide permet de porter très rapidement l'ensemble du lit à sa température optimale de service.

Il est possible d'améliorer la sécurité du système en empêchant tout risque de combustion dans le tube (2) de répartition du gaz de fluidisation ou vers l'amont de celui-ci. Il est possible, par exemple d'entraver par une vanne 7 tout passage de combustible dans la rampe 5/qu'u- tant ne pression relevée en 6 n'est pas suffisante et/ou qu'une température mesurée en 10 est supérieure à une valeur fixée.

Lors de l'utilisation du procédé dans un four de calcination ou de pyrolyse, le débit du gaz froid de fluidisation est suffisant pour maintenir la rampe 5 à une température suffisamment basse pour l'utiliser comme seul distributeur de carburant.

Le dispositif, objet de l'invention, peut être utilisé dans tous les cas où une combustion, une pyrolyse ou une calcination est réalisée dans un lit fluidisé, techniques courantes dans l'industrie. Des applications particulièrement intéressantes peuvent être la réalisation de fours ou d'installations de chauffage à lit fluidisé utilisant des carburants solides divers ou devant fonctionner au gaz. L'utilisation du procédé pour le démarrage d'un four à lit fluidisé est particulièrement performant.

4

" REVENDICATIONS "

1 - Procédé de démarrage, de préchauffage ou de chauffage d'un ensemble de combustion à lit fluidisé, caractérisé par l'absence de plaque de distribution au fond du lit et par le fait que le carburant utilisé pour le préchauffage ou le chauffage est injecté dans l'axe d'un ou de plusieurs des orifices (8) par lesquels le gaz de fluidisation, qui peut être le comburant est libéré par les tubes horizontaux de répartition (2) dans le lit (4) ; la proportion des deux étant telle que la combustion se fasse à l'extérieur du tube (2) de répartition du gaz de fluidisation.

2 - Appareillage selon la revendication 1 caractérisé en ce que la distribution (5) du carburant aux systèmes d'injection (9) est située dans l'axe d'un ou de plusieurs tubes horizontaux (2) de répartition du gaz de fluidisation.

3 - Appareillage selon la revendication 2 caractérisé en ce que l'arrivée du carburant dans le système d'injection ne peut se faire que lorsque le circuit de répartition du gaz de fluidisation est à une pression supérieure à la pression mesurée au niveau du lit.

4 - Appareillage selon la revendication 2 caractérisé en ce que l'arrivée du carburant dans le système d'injection ne peut se faire que lorsque la température dans les tubes de répartition du gaz de fluidisation est inférieure à une valeur fixée.

5 - Appareillage selon l'une des revendications précédentes caractérisé en ce que l'alimentation du lit en carburant solide est réalisée par un ou plusieurs broyeurs à marteaux dont le profil des marteaux et la vitesse de rotation de l'arbre sont tels que le flux d'air formé est suffisant pour empêcher toute remontée de la combustion, et ce, sans perturber les mouvements gazeux dans le foyer.

FIG 2

FIG 1

Office européen
des brevets

**RAPPORT DE RECHERCHE EUROPEENNE**

Numéro de la demande

EP  82 40 0763

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| P,X | WO-A-8 102 057 (PYRECON) *Page 9, lignes 24-35; page 10, lignes 1-27; page 11, lignes 19-34; page 18, lignes 2-33; figures 2a, 3, 4, 9a, 9b, 10a* | 1,2 | F 23 C   11/02 B 01 J    8/18 F 27 B   15/14 |
| | --- | | |
| Y | DE-A-2 644 146 (METALLGESELLSCHAFT) *Page 8, paragraphe 3; page 9, paragraphe 2 - page 11, paragraphe 1; page 13 en entier; page 14, paragraphe 1; figures* | 1 | |
| | --- | | |
| Y | FR-A-2 446 440 (THE ENERGY EQUIPMENT CO) *Page 1, lignes 1-12; page 5, lignes 22-29; page 6, lignes 18-22; figures 1,3* | 1 | |
| | | | **DOMAINES TECHNIQUES RECHERCHES (Int. Cl. ³)** |
| A | GB-A-1 417 986 (BRITISH PETROLEUM) *Page 2, lignes 6-34; figures* | 1,2 | |
| | --- | | F 23 C F 23 G |
| A | DE-A-2 612 198 (RASCHKA) *Page 10, dernier paragraphe - page 13, ligne 17; figures 2,3* | 5 | B 01 J F 27 B |
| | ----- | | |

Le présent rapport de recherche a été établi pour toutes les revendications

| Lieu de la recherche | Date d'achèvement de la recherche | Examinateur |
|---|---|---|
| LA HAYE | 06-08-1982 | PHOA Y.E. |